# EUROPÄISCHE PATENTANMELDUNG

(11) **EP 1 380 469 A2**
(43) Veröffentlichungstag der Anmeldung: **14.01.2004**
(21) Anmeldenummer: 03102059.7
(22) Anmeldetag: 09.07.2003
(51) Int. Cl.: B60Q 3/02, G02B 6/00

(54) **Beleuchtungseinrichtung für Fahrzeuge**

(30) Priorität: 11.07.2002 DE 10231325
(71) Anmelder: Hella KG Hueck & Co., 59552 Lippstadt (DE)
(72) Erfinder: Nachtigall, Klaus, 79199, Kirchzarten (DE); Zwick, Hubert, 70173, Stuttgart (DE)

(57) **Zusammenfassung**

Eine Beleuchtungseinrichtung für ein Fahrzeug (2), insbesondere innenleuchte, hat wenigstens ein Leuchtmittel (4) und mindestens ein diesem zugeordnetes Lichtsammelteil. Das Lichtsammelteil ist als Lichtleiter (5) mit wenigstens einer dem Leuchtmittel (4) zugewandten Lichteintrittsfläche (7) und zumindest einer davon beabstandete Lichtaustrittsfläche (8) ausgebildet. Der Lichtleiter (5) weist zwischen der Lichteintrittsfläche (7) und der Lichtaustrittsfläche (8) wenigstens zwei an seinem Außenumfang einander gegenüberliegend angeordnete Seitenflächenbereiche (10) auf, an denen das in dem Lichtleiter (5) geführte Licht der Totalreflexion unterliegt. Die Seitenflächenbereiche (10) verlaufen zum Bündeln des Lichts derart schräg zueinander, dass sich der Querschnitt des Lichtleiters (5), ausgehend von der Lichteintrittsfläche (7) zu der Lichtaustrittsfläche (8), aufweitet.

## Beschreibung

Die Erfindung betrifft eine Beleuchtungseinrichtung für ein Fahrzeug, insbesondere eine Innenleuchte, mit wenigstens einem Leuchtmittel und mindestens einem diesem zugeordneten Lichtsammelteil,

Eine derartige Beleuchtungseinrichtung, die als Leuchtmittel eine Glühlampe aufweist, ist aus der Praxis bekannt. Dem Leuchtmittel ist ein Ellipsoid-Reflektor als Lichtsammeltell zugeordnet, der das von dem Leuchtmittel abgegebene Licht bündelt. Das auf diese Weise erzeugte Lichtbündel wird in eine Ende eines Lichtleiters eingekoppelt, der mit seinem anderen Ende einer zu beleuchteten Stelle zugewandt ist. An den Seitenflächen des Lichtleiters wird das in diesem geführte Licht unter Ausnutzung der Totalreflexion reflektiert. Der Öffnungswinkel, unter dem das Lichtbündel aus dem Lichtleiter austritt, entspricht dem Öffnungswinkel, den das Lichtbündel vor dem Eintritt in den Lichtleiter hatte. Der Lichtleiter strahlt also ein relativ enges Lichtbündel ab.

Es ist auch bereits bekannt, das von einer Glühlampe abgestrahlte Licht ohne die Verwendung eines Lichtsammelteils direkt in einen Lichtleiter einzukoppeln. In diesem Fall weist das in den Lichtleiter eingekoppelte Lichtbündel einen größeren Öffnungswinkel auf als bei der bereits erwähnten Anordnung mit Lichtsammelteil. Der Öffnungswinkel des in den Lichtleiter eingekoppelten Lichtbündels ist einerseits von dem Abstand der Abstrahlstelle des Leuchtmittels zu der Lichteintrittsfläche des Lichtleiters und andererseits aber auch von den Abmessungen der Lichteintrittsfläche abhängig. Da auch hier der Öffnungswinkel des Lichtbündels beim Durchtritt durch den Lichtleiter in etwa erhalten bleibt, ergibt gegenüber einer Beleuchtungseinrichtung mit Lichtsammeltell auch ein entsprechend größerer Öffnungswinkel des aus dem Lichtleiter austretenden Lichtbündels.

Zwar kann der Öffnungswinkel durch Vergrößern des Abstands zwischen dem Leuchtmittel und der Lichteintrittstfläche reduziert werden, jedoch nimmt die in den Lichtleiter eingekoppelte Lichtmenge mit zunehmendem Abstand zwischen dem Leuchtmittel und der Lichteintrittsfläche ab, so dass sich dann nur noch ein relativ schlechter Wirkungsgrad der Beleuchtungseinrichtung ergibt0. Dies ist insbesondere bei Verwendung eines Leuchtmittels ungünstig, das unter einem großen Abstrahlwinkel Licht abstrahlt, da dann bei einem großen Abstand zwischen dem Leuchtmittel und der Lichteinkoppelfläche nur noch ein sehr geringer Teil des von dem Leuchtmittel abgestrahlten Lichts in den Lichtleiter eingekoppelt wird. Durch Zwischenschaltung einer Sammellinse zwischen Leuchtmittel und Lichteinkoppelfläche kann der optische Wirkungsgrad der Beleuchtungseinrichtung zwar gestelgert werden, jedoch muss die Sammellinse dann einen relativ großen Durchmesser aufweisen, weil das Leuchtmittel zur Erzielung eines Lichtbündels mit kleinem Öffnungswlnkel etwa im Brennpunkt der Sammellinse und somit in relativ großer Entfernung von der Sammellinse angeordnet sein muss.

Es besteht deshalb die Aufgabe, eine Beleuchtungseinrichtung der eingangs genannten Art zu schaffen, die bei einem einfachen Aufbau eine Bündelung des von dem Leuchtmittel abgestrahlten Lichts ermöglicht. Dabei soll die Beleuchtungseinrichtung auch bei einem Leuchtmittel, das unter einem großen Abstrahlwinkel Licht abstrahlt, eine gute Ausnutzung des von dem Leuchtmittel abgestrahlten Lichts ermöglichen.

Diese Aufgabe wird dadurch gelöst, dass das Lichtsammelteil als Lichtleiter mit wenigstens einer dem Leuchtmittel zugewandten Lichteintrittsfläche und zumindest einer davon beabstandeten Lichtaustrittsfläche ausgebildet ist, dass der Lichtleiter zwischen der Lichteintrittsfläche und der Lichtaustrittsfläche wenigstens zwei an seinem Außenumfang einander gegenüberliegend angeordnete Seitenflächenbereiche aufweist, an denen das in dem Lichtleiter geführte Licht der Totalreflexion unterliegt, und dass diese Seitenflächenbereiche zum Bündeln des Lichts derart schräg zueinander verlaufen, dass sich der Querschnitt des Lichtleiters, ausgehend von der Lichteintrittsfläche zu der Lichtaustrittsfläche, aufweitet.

In vorteilhafter Weise reduziert sich dadurch bei jeder Reflexion der in dem Lichtleiter geführten Lichtstrahlen an den schräg zueinander verlaufenden Seitenflächenbereichen der Winkel, unter dem die Lichtstrahlen zur Längserstreckungsrichtung des Lichtleiters geneigt sind. Dabei findet bei jeder Reflexion eine Verengung des in dem Lichtleiter geführten Lichtbündels um den doppelten, zwischen den Seitenflächenbereichen des Lichtleiters eingeschlossenen Öffnungswinkel des Lichtleiters statt. Dieser Effekt ist für stark gegen die Längserstreckung des Lichtleiters geneigte Lichtstrahlen besonders effektiv, da diese an den Seitenflächenbereichen öfter reflektiert werden als weniger stark geneigte Lichtstrahlen. Lichtstrahlen, die bereits unmittelbar nach dem Durchtritt durch die Lichteintrittsfläche parallel zur Achse des Lichtleiters verlaufen, bleiben unverändert, da sie nicht reflektiert werden. Nach dem Austreten aus dem Lichtleiter weist das in dem Lichtleiter geführte Lichtbündel somit einen kleineren Öffnungswinkel auf als vor dem Eintritt in den Lichtleiter, d.h. die Lichtstrahlen werden beim Durchtritt durch den Lichtleiter "parallelisiert". Da eine derartiges, als Lichtleiter ausgebildetes Lichtsammelteil im Unterschied zu einem Linsenelement oder einem Fokussierspiegel keinen definierten Brennpunkt aufweist, kann die Lichteintrittsfläche des Lichtbündel-Elements bellebig nahe an der Lichtabstrahlstelle des Leuchtmittels angeordnet sein, wobei der Abstand zwischen der Lichteintrittsfläche und dem Lichtbündel-Element gegebenenfalls sogar auf Null reduziert sein kann. Somit kann auf einfache Weise eine nahezu vollständige Einkoppelung des von dem Leuchtmittel abgestrahlten Lichts in den Lichtleiter erreicht werden, d.h. die Lichtbündelung erfolgt nahezu verlustfrei.

Bei einer vorteilhaften Ausführungsform der Erfindung erstrecken sich die paarweise einander zugeordneten Seitenflächenbereiche nur über einen Teil der Längserstreckung des Lichtleiters, wobei der Lichtleiter in dem übrigen Teil seiner Längserstreckung zumindest abschnittweise einen vorzugsweise konstanten Querschnitt aufweist. Durch diese Maßnahme kann bei einem langen Lichtleiter die Querschnittsabmessung am Lichtaustrittsende des Lichtleiters begrenzt werden.

Bei einer bevorzugten Ausgestaltung der Erfindung weist der Lichtleiter zumindest ein erstes und ein zweites Paar jeweils einander gegenüberliegender, schräg zueinander verlaufender Seltenflächenbereiche auf, wobei die Richtung, in der sich die Seitenflächenbereiche des ersten Paares gegenüberliegen, quer zu der Richtung angeordnet ist, in der sich die Seitenflächenbereiche des zweiten Paares gegenüberliegen. Die Seitenflächenbereiche sind dabei in Umfangsrichtung des Lichtleiters zueinander versetzt angeordnet. Der Querschnitt des Lichtleiters kann sich dabei beispielsweise von einem Quadrat in ein größeres Quadrat aufweiten. Das in dem Lichtleiter geführte Licht wird dann in unterschiedlichen, quer zueinander verlaufenden Längsebenen des Lichtleiters gebündelt.

Es ist aber auch denkbar, dass der Lichtleiter zumindest ein erstes und ein zweites Paar jeweils einander gegenüberliegender, schräg zueinander verlaufender Seitenflächenbereiche aufweist, und dass diese Paare in Längserstreckungsrichtung des Lichtlelters zueinander versetzt angeordnet sind. Bedarfsweise kann zwischen den zueinander versetzten Seitenflächenbereichen ein Lichtleiterabschnitt mit über seine Länge konstantem Querschnitt angeordnet sein. Auch durch diese Maßnahmen kann eine gewünschte Lichtbündelung erreicht werden. Dabei ist es insbesondere möglich, das Licht nur in einer bestimmten, quer zur Längserstreckung des Lichtleiters liegenden. Ebene zu bündeln.

Bei einer besonders vorteilhaften Ausführungsform der Erfindung sind die jeweils zwischen den jeweils paarweise einander gegenüberliegenden Seitenflächenbereichen eingeschlossenen Öffnungswinkel bei wenigstens zwei Paar dieser Seitenflächenbereiche unterschiedlich groß. Wenn diese Seitenflächenbereich in Umfangsrichtung des Lichtleiters zueinander versetzt sind, ergibt sich eine asymmetrische Lichtbündelung. Dadurch ist es beispielsweise möglich, ein Lichtbündel mit quadratischem Querschnitt in ein Lichtbündel mit rechteckigem Querschnitt umzuformen. Umgekehrt kann aber auch ein Lichtbündel mit rechteckigem Querschnitt beim Durchtritt durch den Lichtleiter in ein Lichtbündel mit quadratischem Querschnitt aufgeweltet werden.

Bei einer zweckmäßigen Ausgestaltung der Erfindung weitet sich der Querschnitt des Lichtleiters entlang der schräg zuelnander verlaufenden Seitenflächenbereiche von einer ersten Querschnittsform in eine zweite Querschnittsform auf, wobei die zweite Querschnittsform einer Streckung der ersten Querschnittsform entspricht. Der Lichtleiter ist dann bei der Entwicklung der Beleuchtungseinrichtung auf einfache Weise beispielsweise mittels eines CAD-Systems konstruierbar. Bei der Konstruktion der Beleuchtungseinrichtung kann die Querschnittsform entsprechend der jeweils gewünschten Abstrahlcharakteristik der Beleuchtungseinrichtung gewählt werden.

Bei einer bevorzugten Ausführungsform der Erfindung ist die erste Querschnittsform ein Kreis und die zweite Querschnittsform eine Ellipse. Der Lichtleiter kann als Kunststoffspritzgussteil ausgebildet sein, wobei die Geometrie des Lichtleiters eine vergleichsweise kostengünstige Herstellung des für die Fertigung des Lichtleiters benötigten Spritzgusswerkzeugs ermöglicht. Außerdem lässt sich der Lichtleiter gut aus der Spritzgießform entformen. Das dem Lichtleiter zugeordnete Leuchtmittel weist bevorzugt eine punkt- oder kreisscheibenförmige Lichtabstrahlung auf, die eine gute Lichteinkopplung in die kreisförmige erste Querschnittsform des Lichtleiters ermöglicht.

Bei einer anderen vorteilhaften Ausführungsform der Erfindung weitet sich der Querschnitt des Lichtleiters entlang der schräg zueinander verlaufenden Seitenflächenbereiche von einer Kreisform in eine Querschnittsform auf, die durch zwei Halbkreise und zwei die Enden dieser Halbkreise miteinander verbinden parallelen Geraden begrenzt ist. Bei dieser Ausführungsform ergibt sich gegenüber derjenigen mit elliptischem Austrittsquerschnitt eine andere Lichtvertellung.

Bei einer zweckmäßigen Ausgestaltung der Erfindung weist die Lichtaustrittsfläche wenigstens eine Schräge auf, die gegenüber einer orthogonal zur Längserstreckung des Lichtleiters angeordneten Ebene geneigt ist, wobei gegebenenfalls mindestens zwei dieser Schrägen durch mindestens eine Stufe oder einen Absatz zueinander versetzt angeordnet sind. Die Hauptabstrahlrichtung des Lichtbündels ist dann unter einem Winkel zur Längsachse des Lichtleiters geneigt. Dies ist vor allem bei einer Innenleuchte zweckmäßig, bei welcher der zu beleuchtende Bereich der Inneneinrichtung des Fahrzeugs nicht direkt der Innenleuchte gegenüberliegend angeordnet ist, sondern seitlich dazu versetzt ist.

Vorteilhaft ist, wenn wenigstens ein Leuchtmittel als Flächenstrahler ausgebildet ist, insbesondere als Elektrolumineszenzfolie oder organische Leuchtdiode (oLED). Der Flächenstrahler kann dann dicht an der Lichteintrittsfläche des Lichtleiters angeordnet sein, so dass nahezu das gesamte von dem Flächenstrahler abgestrahlte Licht mittels des Lichtleiters gebündelt werden kann.

Nachfolgend sind Ausführungsbeispiele der Erfindung anhand der Zeichnung näher erläutert. Es zeigt zum Teil stärker schematisiert:
- Fig. 1: eine Teilansicht eines teilweise im Querschnitt dargestellten Leuchtengehäuses einer Innenleuchte, wobei an dem Leuchtengehäuse ein Lichtleiter angeordnet ist, der das Licht einer Leuchtdiode bündelt,
- Flg. 2: einen Längsschnitt durch einen Lichtleiter, an dessen Lichteintrittsfläche eine Leuchtdiode angeordnet ist, wobei der Strahlengang in dem Lichtleiter durch Lichtstrahlen markiert ist,
- Fig.3: eine perspektivische Seitenansicht des Lichtleiters, der eine gestufte Lichtaustritisfläche aufweist,
- Fig. 4: eine Aufsicht auf ein Fahrzeug, wobei das Dach des Fahrzeugs durchsichtig dargestellt ist, um die Sicht auf die Fahrzeuginneneinrichtung freizugeben, und
- Fig. 5: einen Längsschnitt durch einen weiteren Lichtlelter, wobei der Strahlengang in dem Lichtleiter durch Lichtstrahlen markiert ist.

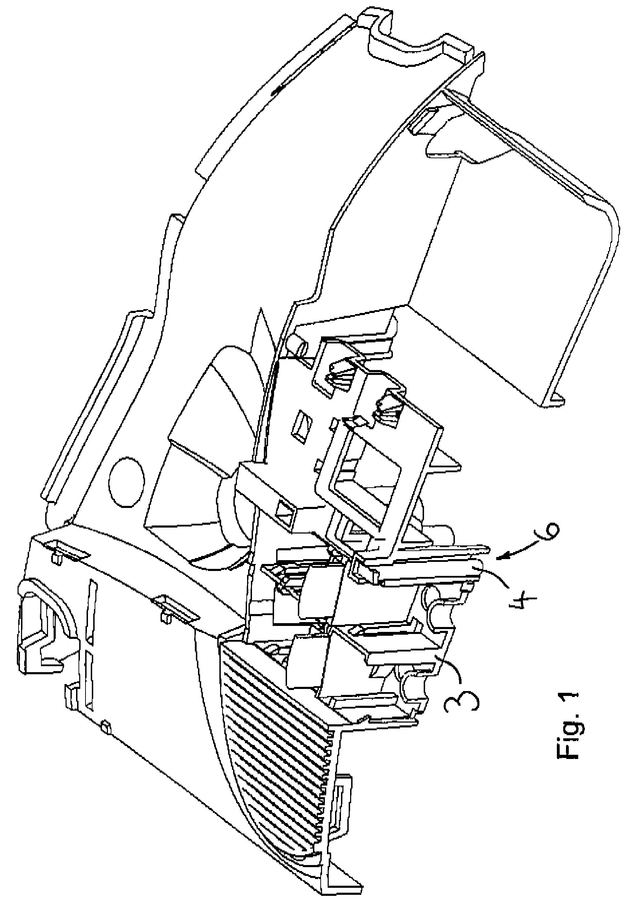

Eine als Innenleuchte zur ambienten Beleuchtung eines Innenraums 1 eines Fahrzeugs 2 ausgebildete Beleuchtungseinrichtung weist ein Trägerteil 3 auf (Fig. 1), an dem ein Leuchtmittel 4 und ein diesem zugeordneter Lichtleiter 5 angeordnet sind. Das Leuchtmittel 4 ist als Leuchtdiode ausgebildet, die auf einer in der Zeichnung nicht näher dargestellten Leiterplatte montiert ist, die elektrische Anschlüsse zum Verbinden mit einer Stromversorgung (Batterie) des Fahrzeugs 2 hat. Die Leiterplatte ist an der in Gebrauchstellung dem Innenraum 1 des Fahrzeugs 2 abgewandten Rückseite des Trägerteils 3 angeordnet und an dort befindlichen Befestigungsstellen mit diesem verbunden. Das Leuchtmittel 4 ist hinter einer Öffnung 6 positioniert, die das Trägerteil 3 durchsetzt. In diese Öffnung 6 ist der Lichtleiter 5 eingesetzt.

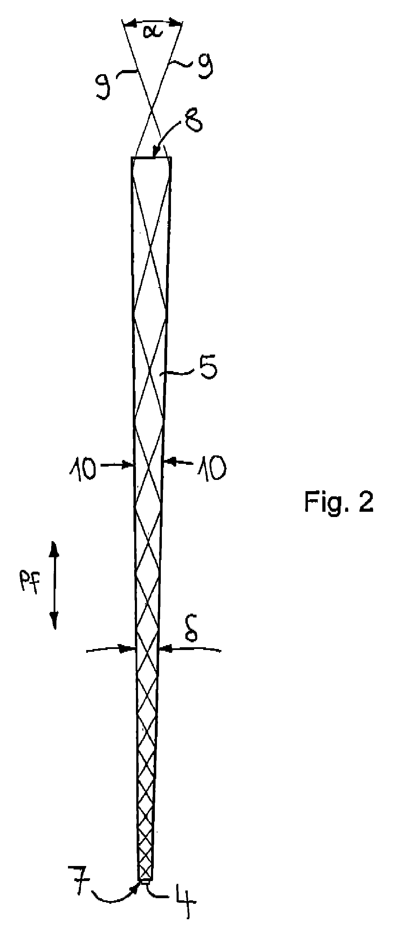

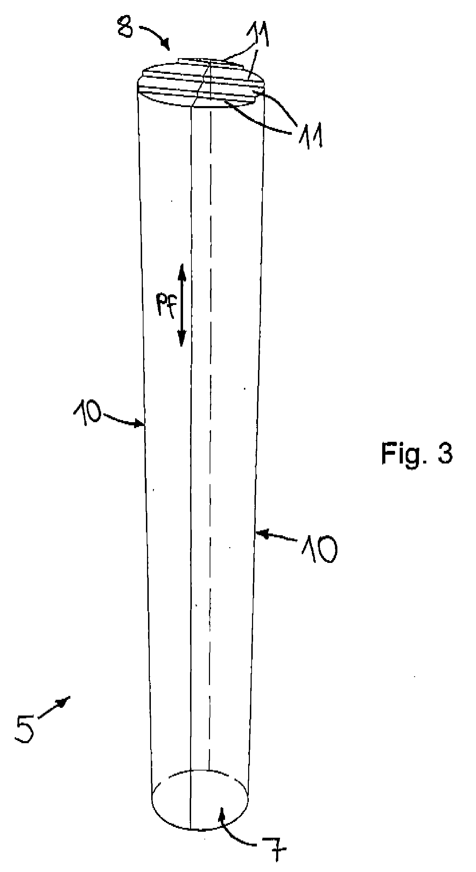

Wie in Fig. 2 und 3 erkennbar ist, ist der Lichtleiter 5 stabförmig ausgebildet und hat an seinem dem Leuchtmittel 4 zugewandten einen Ende eine Lichteintrittsfläche 7 und an seinem davon entfernten, dem Innenraum 1 zugewandten anderen Ende eine Lichtaustrittsfläche 8. Die Normale auf die Mantelfläche des Lichtleiters 5 ist derart relativ zu den in dem Lichtleiter 5 geführten Lichtstrahlen 9 angeordnet, dass diese beim Auftreffen auf die Mantelfläche der Totalreflexion unterliegen.

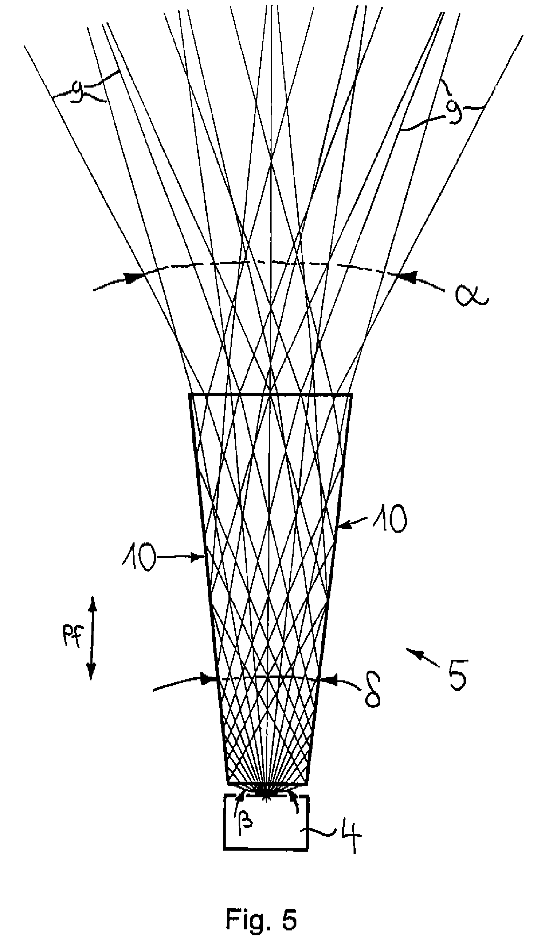

Der Lichtleiter 5 ist als Lichtsammeltell ausgebildet, welches das durch den Lichtleiter 5 hindurchtretende Licht derart bündelt, dass der Öffnungswinkel α des aus dem Lichtleiter 5 ausgetretenen Lichtbündels kleiner ist als der Öffnungswinkel β des Lichtbündels vor dem Eintritt in den Lichtleiter 5. Dies wird dadurch erreicht, dass an dem Außenumfang des Lichtleiters 5 jeweils diametral einander gegenüberliegende Seitenflächenbereiche 10 des Lichtleiters 5 derart schräg zueinander verlaufen, dass sich der Querschnitt des Lichtleiters 5, ausgehend von der Lichteintrittsfläche 7 zu der Lichtaustrittsfläche 8, aufweltet. In orthogonal zur Längsmittelachse des Lichtleiters 5 angeordneten Ebenen verlaufen die Seltenflächenbereiche 10 punktsymmetrisch zur Längsmittelachse des Lichtleiters 5. Wie bei dem Ausführungsbeispiel nach Fig. 5 besonders gut erkennbar ist, reduziert sich der Winkel, unter dem die Lichtstrahlen 9 zur Längserstreckungsrichtung Pf oder zur Längsmittelachse des Lichtleiters 5 geneigt sind, bei der Reflexion der Lichtstrahlen 9 an den Seitenflächenbereichen 10 jeweils um den doppelten, zwischen den einander gegenüberliegenden Seitenflächenbereichen 10 eingeschlossenen Öffnungswinkel δ des Lichtleiters 5. In Fig.5 ist weiter erkennbar, dass dieser Effekt bei den Lichtstrahlen 9, die vor dem Eintritt in den Lichtleiter 5 stark gegen dessen Längserstreckungsrichtung Pf geneigt sind, besonders effektiv ist, da diese Lichtstrahlen 9 mehrfach an den schräg zueinander verlaufenden Seitenflächenbereichen 10 reflektiert werden.

Bei dem Ausführungsbeispiel nach Fig. 2 und 3 weist der Lichtleiter 5 mehrere, etwa streifenförmig in Längserstreckungsrichtung Pf verlaufende, jeweils diametral einander gegenüberliegende Seitenflächenbereiche 10 auf, die in Umfangsrichtung des Lichtleiters 5 zueinander versetzt angeordnet sind. Dabei sind die jeweils zwischen den diametral einander gegenüberliegenden Seitenflächenbereichen 10 eingeschlossenen Öffnungswinkel δ in Durchmesserebenen, die quer zueinander verlaufen, unterschiedlich groß. Dies wird dadurch erreicht, dass sich der Querschnltt des Lichtleiters 5 ausgehend von der Lichteintrittsfläche 7 zu der Lichtaustrittsfläche 8 von einem kreisförmigen Querschnitt in einen elliptischen Querschnitt aufweitet, wobei der elliptische Querschnitt durch Streckung des kreisförmigen Querschnitts gebildet ist. Dadurch ergibt sich in quer zueinander verlaufenden Durchmesserrichtungen des Lichtleiters 5 eine unterschiedliche Lichtbündelung. Die Richtung, in welcher der kreisförmige Querschnitt durch Streckung in den elliptischen Querschnitt überführbar ist, ist in Gebrauchsstellung der innenleuchte quer und insbesondere rechtwinklig zur Längsachse 12 des Fahrzeugs 2 bzw. zu dessen Fahrtrichtung angeordnet. Die Innenleuchte strahlt dadurch ein ovales Lichtbündel ab, dessen größte Querschnittsabmessung in Richtung der Längsachse 12 des Fahrzeugs 2 orientiert ist.

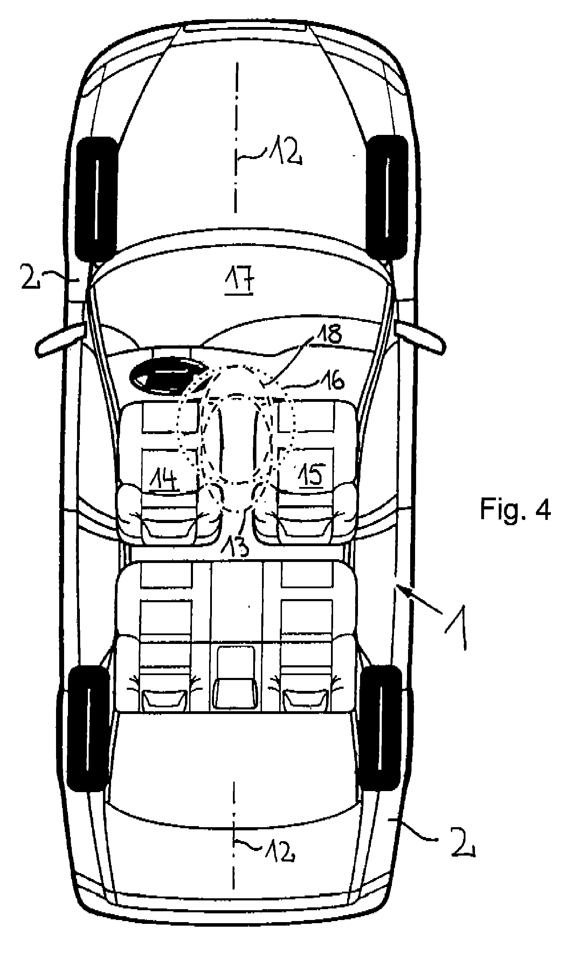

In Fig. 4 ist der mittels der Innenleuchte auf die Inneneinrichtung des Fahrzeugs 2 projizierte ovale Lichtfleck mit einer strichpunktierten Linie 13 markiert. Deutlich ist erkennbar, dass die Lichtverteilung so gewählt ist, dass eine auf dem Fahrersitz 14 oder dem Beifahrersitz 15 sitzende Person durch das Licht der Innenleuchte nicht angestrahlt oder geblendet wird. Die innenleuchte kann dadurch bei Nachtbetrieb des Fahrzeugs auch während der Fahrt ständig eingeschaltet sein, um die zwischen dem Fahrersitz 14 und dem Beifahrersitz 15 befindliche Inneneinrichtung, wie z.B. eine Mittelkonsole, gleichförmig auszuleuchten. In Fig. 4 ist zum Vergleich mit einer punktierten Linie 16 noch ein weiterer Lichtfleck bezeichnet, der sich bei einer Innenleuchte mit rotationssymmetrischer Lichtabstrahlung ergeben würde.

Bei dem Ausführungsbeispiel nach Fig. 5 weist der Lichtleiter 4 an seinem dem Leuchtmittel 4 zugewandten Ende einen quadratischen Querschnitt auf, der sich zu dem gegenüberliegenden, dem innenraum 5 zugewandten Ende des Lichtleiters 4 kontinuierlich zu einem quadratischen Querschnitt mit größeren Abmessungen aufweitet. Der Lichtleiter 4 hat also die Form eines Obelisks. In entsprechender Weise kann der Lichtleiter 4 auch andere eckige Grundformen aufweisen und beispielsweise als Pyramidenstumpf ausgebildet sein. Als Leuchtmittel 4 ist bei dem Ausführungsbeispiel nach Fig. 5 eine bereichsweise mit einem Leuchtstoff beschichtete Elektrolumineszenzfolie vorgesehen.

Bei dem Ausführungsbeispiel nach Fig. 3 weist die Lichtaustrittsfläche 8 mehrere Schrägen 11 auf, die gegenüber einer orthogonal zur Längserstreckungsrichtung Pf des Lichtleiters 5 angeordneten Ebene geneigt sind. Die Schrägen 11 sind jeweils streifenförmig ausgebildet und mit ihrer Längserstreckung quer zu ihrer Neigungsrichtung orientiert. Zueinander benachbart nebeneinander angeordnete Schrägen 11 sind mit ihren Erstreckungsebenen parallel zueinander orientiert. Dabei ist zwischen diesen Schrägen 11 jeweils eine Stufe oder ein Absatz vorgesehen.

Selbstverständlich sind auch andere Ausführungsformen denkbar, bei denen die Schrägen 11 unter unterschiedlichen Winkeln gegenüber der orthogonal zur Längserstreckungsrichtung Pf des Lichtleiters 4 angeordneten Ebene geneigt sein können. Durch die schräg gestufte Lichtaustrittsfläche 8 wird das aus dem Lichtleiter 4 austretende Lichtbündel seitlich von der Längsmittelachse des Lichtleiters 5 weg abgelenkt. In Gebrauchsstellung der Innenleuchte ist die Neigungsrichtung der Schrägen 11 derart orientiert, dass das Lichtbündel von der Windschutzscheibe 17 des Fahrzeugs 2 in Richtung zur Fahrzeugmitte verschoben wird. Um dies zu verdeutlichen ist in Fig. 4 mit der strichllnierten Linie 18 noch ein Lichtfleck markiert, der sich bei einer Innenleuchte ergeben würde, bei der die Lichtaustrittsfläche orthogonal zur Längserstreckungsrichtung Pf des Lichtleiters 5 angeordnet ist.

Somit ergibt sich eine Beleuchtungseinrichtung für ein Fahrzeug 2, insbesondere Innenleuchte, die wenigstens ein Leuchtmittel 4 und mindestens ein diesem zugeordnetes Lichtsammelteil hat. Das Lichtsammelteil ist als Lichtleiter 5 mit wenigstens einer dem Leuchtmittel 4 zugewandten Lichteintrittsfläche 7 und zumindest einer davon beabstandete Lichtaustrittsfläche 8 ausgebildet. Der Lichtleiter 5 weist zwischen der Lichteintrittsfläche 7 und der Lichtaustrittsfläche 8 wenigstens zwei an seinem Außenumfang einander gegenüberliegend angeordnete Seitenflächenbereiche 10 auf, an denen das in dem Lichtleiter 5 geführte Licht der Totalreflexion unterliegt. Die Seitenflächenbereiche 10 verlaufen zum Bündeln des Lichts derart schräg zueinander, dass sich der Querschnitt des Lichtleiters 5, ausgehend von der Lichteintrittsfläche 7 zu der Lichtaustrittsfläche 8, aufweitet.

## Patentansprüche

1. Beleuchtungseinrichtung fur ein Fahrzeug (2), insbesondere Innenleuchte, mit wenigstens einem Leuchtmittel (4) und mindestens einem diesem zugeordneten Lichtsammelteil, **dadurch gekennzeichnet, dass** das Lichtsammelteil als Lichtleiter (5) mit wenigstens einer dem Leuchtmittel (4) zugewandten Lichteintrittsfläche (7) und zumindest einer davon beabstandete Lichtaustrittsfläche (8) ausgebildet ist, dass der Lichtleiter (5) zwischen der Lichteintrittsfläche (7) und der Lichtaustrittsfläche (8) wenigstens zwei an seinem Außenumfang einander gegenüberliegend angeordnete Seitenflächenbereiche (10) aufweist, an denen das in dem Lichtleiter (5) geführte Licht der Totalreflexion unterliegt, und dass diese Seitenflächenbereiche (10) zum Bündeln des Lichts derart schräg zueinander verlaufen, dass sich der Querschnitt des Lichtleiters (5), ausgehend von der Lichteintrittsfläche (7) zu der Lichtaustrittsfläche (8), aufweitet.

2. Beleuchtungseinrichtung nach Anspruch 1, **dadurch gekennzeichnet, dass** sich die paarweise einander zugeordneten Seitenflächenbereiche (10) nur über einen Tell der Längserstreckung des Lichtleiters (5) erstrecken und dass der Lichtleiter (5) in dem übrigen Tell seiner Längserstreckung zumindest abschnittweise einen vorzugsweise konstanten Querschnitt aufweist.

3. Beleuchtungseinrichtung nach Anspruch 1 oder 2, **dadurch gekennzeichnet, dass** der Lichtleiter (5) zumindest ein erstes und ein zweites Paar jeweils einander gegenüberliegender, schräg zueinander verlaufender Seitenflächenbereiche (10) aufweist, und dass die Richtung, in der sich die Seitenflächenbereiche (10) des ersten Paares gegenüberliegen, quer zu der Richtung angeordnet ist, in der sich die Seitenflächenbereiche (10) des zweiten Paares gegenüberliegen.

4. Beleuchtungseinrichtung nach einem der Ansprüche 1 bis 3, **dadurch gekennzeichnet, dass** der Lichtleiter (5) zumindest ein erstes und ein zweites Paar jewells einander gegenüberliegender, schräg zueinander verlaufender Seitenflächenbereiche (10) aufweist, und dass diese Paare in Längserstreckungsrichtung des Lichtleiters zueinander versetzt angeordnet sind.

5. Beleuchtungseinrichtung nach einem der Ansprüche 1 bis 4, **dadurch gekennzeichnet, dass** die jeweils zwischen den jeweils paarweise einander gegenüberliegenden Seitenflächenbereichen (10) eingeschlossenen Öffnungswinket (δ) bei wenigstens zwei Paar dieser Seitenflächenbereiche (10) unterschiedlich groß sind.

6. Beleuchtungseinrichtung nach einem der Ansprüche 1 bis 5, **dadurch gekennzeichnet, dass** sich der Querschnitt des Lichtleiters (5) entlang der schräg zueinander verlaufenden Seitenflächenbereiche (10) von einer ersten Querschnittsform in eine zweite Querschnittsförm aufweitet, und dass die zweite Querschnittstform einer Streckung der ersten Querschnittsform entspricht.

7. Beleuchtungseinrichtung nach einem der Ansprüche 1 bis 6, **dadurch gekennzeichnet, dass** die erste Querschnittsform ein Kreis und die zweite Querschnittsform eine Ellipse ist.

8. Beleuchtungseinrichtung nach einem der Ansprüche 1 bis 7, dass sich der Querschnitt des Lichtleiters (5) entlang der schräg zueinander verlaufenden Seitenflächenbereiche (10) von einer Kreisform in eine Querschnittsform aufweitet, die durch zwei Halbkreise und zwei die Enden dieser Halbkreise miteinander verbinden parallelen Geraden begrenzt ist.

9. Beleuchtungseinrichtung nach einem der Ansprüche 1 bis 8, **dadurch gekennzeichnet, dass** die Lichtaustrittsfläche wenigstens eine Schräge (11) aufweist, die gegenüber einer orthogonal zur Längserstreckung des Lichtleiters (5) angeordneten Ebene geneigt ist, und dass gegebenenfalls mindestens zwei dieser Schrägen (11) durch mindestens eine Stufe oder einen Absatz zueinander versetzt angeordnet sind.

10. Beleuchtungseinrichtung nach einem der Ansprüche 1 bis 9, **dadurch gekennzeichnet, dass** wenigstens ein Leuchtmittel (4) als Flächenstrahler ausgebildet ist, insbesondere als Elektrolumineszenzfolie oder organische Leuchtdiode (oLED).
